(19) **Europäisches Patentamt**
**European Patent Office**
**Office européen des brevets**

(11) Publication number: **0 153 380 B1**

(12) # EUROPEAN PATENT SPECIFICATION
## published in accordance with Art. 158(3) EPC

(45) Date of publication of patent specification: 22.05.91    (51) Int. Cl.⁵: **B62B 1/22, B62B 1/24**

(21) Application number: **84903183.6**

(22) Date of filing: **29.08.84**

(86) International application number:
**PCT/GB84/00298**

(87) International publication number:
**WO 85/01024 (14.03.85 85/07)**

Consolidated with 84305914.8/0136105
(European application No./publication No.) by
decision dated 23.04.87.

(54) **WHEELBARROW.**

(30) Priority: **30.08.83 GB 8323252**

(43) Date of publication of application:
**04.09.85 Bulletin 85/36**

(45) Publication of the grant of the patent:
**22.05.91 Bulletin 91/21**

(84) Designated Contracting States:
**AT BE CH DE FR GB IT LI LU NL SE**

(56) References cited:
**BG-A- 1 332 010**
**US-A- 1 327 578**
**US-A- 2 544 505**

**See also references of WO8501024**

(73) Proprietor: **Steer, Clive A.**
**"Westview" Shere Road West Horsley**
**Leatherhead Surrey KT24 6EW(GB)**

(72) Inventor: **Steer, Clive A.**
**"Westview" Shere Road West Horsley**
**Leatherhead Surrey KT24 6EW(GB)**

(74) Representative: **Pritchard, Evan**
**10, Chelmsford Road**
**Shenfield Brentwood Essex CM15 8RQ(GB)**

Rank Xerox (UK) Business Services

## Description

This invention relates to wheelbarrows. In this specification, a wheelbarrow is considered to be a handbarrow having a single axis for the load-bearing ground wheels, a bin for the load, and means serving as handles.

The conventional wheelbarrow with a bin for the load, a single wheel mounted in front of this bin and two legs and two handles at the rear of the bin has remained unchanged for many years. This construction however is not an ideal one for many purposes since a wheelbarrow is frequently used in a garden for example in moving loose material over rough ground from one site to another. Whilst emptying of the bin is a simple matter of tilting the barrow over its front wheel to allow the transported material to fall out, the filling of the bin requires the load material to be lifted from ground level to the rim of the bin and the material is then dropped into the bin. By repeating this operation, the bin is gradually filled and when the load is judged to be sufficient the handles are used to push the wheelbarrow with its load of material to the new site.

It is clear that a major proportion of the work involved in transporting the material takes place in the initial operation of loading the bin. If the material is to be transported over a level ground surface, little work is required for the moving of the barrow and in fact as the moving operation can be carried out when the user has his body in a reasonably erect position this is not a particularly tiring part of the operation.

In contrast to this, the operation of loading the bin requires the load material to be lifted from ground level by means of a shovel and the user thus has his body in a bent position which is an unsatisfactory attitude for the spine to adopt when trying to lift a weight. Since many shovel loads are required to fill the bin, the physical work required is substantial and this may lead to fatigue or a muscular strain in the back muscles.

It is an aim of the present invention to provide a wheelbarrow which can be used in a more efficient way than a conventional barrow and will thus be less tiring for the user. The mechanical operation of the present barrow is facilitated by the use of leverage so that filling of the bin can be carried out without the need for the user to repeatedly lift quantities of the material to be transported.

One solution to this problem has been proposed in US-A-1 327 578 which discloses a wheelbarrow having a bin for the load, a ground wheel carried on a frame at a front end of the bin, the frame holding the wheel in a fixed location relative to the bin, and a handle on each side at a rear end of the bin, each handle terminating in a cam-shaped leg arranged to support the bin at its rear end, in which each cam-shaped leg is attached at its periphery to a pivot on the bin. Thus, movement of the handles in the direction of the wheel will cause rotation of the cams so that the bin rear end is lowered to ground level to assist loading, the return of the handles to the rear position causing lifting of the bin. The handle movement and the rolling action of the cam periphery in contact with the ground causes a lifting force to be developed which is controlled by the handle movement. The handles are retained in a working condition of the wheelbarrow by a releasable lock. It is clear that in this construction of wheelbarrow the lifting of the bin must be effected by moving the two handles through the same angle. If these two movements are not effected simultaneously, there is a risk of tilting the bin and spilling any material loaded therein. The present invention was devised in order to improve the lifting operation so that the risk of tilting the bin would be substantially reduced.

According to the invention, there is provided a wheelbarrow having a bin for the load, a ground wheel carried on a frame at a front end of the bin, the frame holding the wheel in a fixed location relative to the bin, and a handle on each side at a rear end of the bin, each handle terminating in a cam-shaped leg arranged to support the bin at its rear end, in which each cam-shaped leg is attached at its periphery to a pivot whereby movement of the handles in the direction of the wheel will cause rotation of the cams so that the bin rear end is lowered to ground level to assist loading, the return of the handles to the rear position causing lifting of the bin, the continuous rolling action of the cam periphery in contact with the ground surface causing a steady and readily controllable lifting force to be developed with the control of this force being maintained throughout the whole range of the handle movement, the handles then being retainable in a working condition of the wheelbarrow by a releasable lock, characterised in that, the frame is fixed to the bin to form one unit therewith and each said pivot to which a respective leg is attached is located on the said frame, and the two handles are coupled together by a joining member which ensures that both handles are movable simultaneously as a rigid unit about the pivots.

In one embodiment, the said joining member is connected to the handles in a position located just below each said pivot. The joining member may be secured by welding to both handles. Each handle may be formed of metal tubing with the cam-shaped leg being shaped as a closed loop from the same material.

The releasable lock means may comprise a bolt capable of passing through holes in the frame. Each cam-shaped leg may carry a support for a secondary wheel, the arrangement being such that part of the curved periphery of the cam is replaced by the perimeter of said secondary wheel.

The bin rear end may carry a roller arranged such that when the rear end has been lowered to ground level, the rear end will be supported on the roller to form a movable scoop.

By way of example, particular embodiments of the invention will now be described with reference to the accompanying drawing, in which:

Figures 1 to 3 show a first embodiment of the wheelbarrow in side view,

Figure 4 is a similar view of a second embodiment, and,

Figure 5 is an end view of the wheelbarrow of Figure 4.

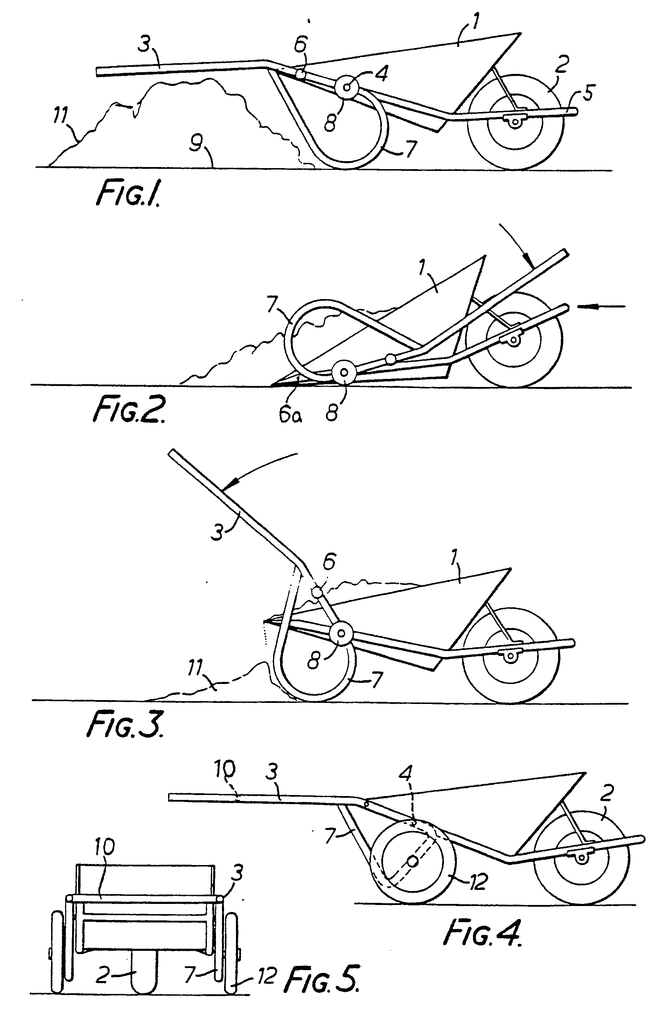

The wheelbarrow shown in Figure 1 had a bin 1 with a ground wheel 2 rigidly fixed at a front end thereof. The wheel 2 was mounted as usual on a shaft and this was carried in two end brackets that were attached to a frame 5 and the frame was secured to the bin 1 by nut and bolt fixings.

A rear end of the bin 1 was provided with a pair of handles 3 that were secured to the bin by pivots 4 that enabled the handles to be moved in a plane parallel to that of the Figure. A bolt 6 on each handle 3 served to lock the handle in a working position with respect to the bin although the bolts could be released when required.

The pivots 4 were carried on the frame 5 and the bolts 6 in the locked position entered holes 6a (Figure 2) in the frame 5. This arrangement ensured that the handles 3 and the frame 5 were securely fastened together in the working position of the wheelbarrow so that a strong and rigid construction would be provided.

A lower part of each handle 3 had a loop portion 7 in the shape of a cam. The cam shape had been formed by bending a curved extension of the handle and then welding the end of the metal tubing to an intermediate point along the length of the tubing to form the closed loop. An upper part of each loop portion 7 was mounted on the pivot 4 and the lower parts formed leg means for supporting the rear end of the wheelbarrow.

Each pivot 4 had coaxially mounted therewith a small roller 8 the purpose of which will be described later.

As shown in the Figure, the wheelbarrow is depicted standing on a ground surface 9 and it is required to be loaded with loose material 11 forming a heap on the ground surface.

In operation of the wheelbarrow to load the loose material 11, the bolts 6 were released and the rear end of the bin 1 was then allowed to sink down between the loop portions 7 by manually raising the handles 3 through a vertical position until they lay alongside the wheel 2. This position is shown in Figure 2. This movement of the handles caused the rear end of the bin 1 to come to rest in contact with or close to the ground surface 9 and the weight of the bin was carried on the two small rollers 8 so that the bin could be moved freely over the surface 9. In this position the bin is able to be moved easily over a smooth surface since it is supported by the two rollers 8 and the wheel 2.

If the wheelbarrow is now pushed from the right hand side as shown in the Figure the rear end of the bin will scoop into the loose material 11 on the ground surface and a useful quantity of the material would become loaded into the bin 1. If required, further material may be pushed or swept into the bin to ensure that it is fully loaded. After loading had been completed, the handles 3 were moved from their nesting position over the wheel 2 back into the working position depicted in Figure 1. An intermediate stage in this movement is shown in Figure 3. Because of the leverage provided by the length of the handle this action was not difficult to carry out and the loop portions 7 were able to roll smoothly over the ground surface 9 and move the bin rear edge a little further in to the material 11 to give a good scooping action.

When the handles 3 were again in the position shown in Figure 1, the bolts 6 which were spring loaded engaged automatically in the holes 6a in the frame 5 so that the handles became fixed in place. The wheelbarrow was then able to be used as a conventional barrow and could be lifted by the handles 3 to enable the load material to be carried to the required site and then emptied from the bin by tipping the material over the front wheel of the barrow as wheelbarrows are usually emptied. If handling fragile material, such as paving stones, these can readily be unloaded from the wheelbarrow without damage by going through the movements that had been used for loading the barrow to unload at ground level.

In an alternative embodiment which is not shown in the drawing, the rear edge of the bin 1 carried a loose flap which was fastened by a hinge along the length of the rear edge. When the rear edge was brought adjacent the ground surface, the flap would fall down to rest on the ground so that any gap that might occur between the ground surface and the rear edge of the bin would be closed by the flap which in this position acted as a ramp to facilitate the operation of pushing material into the bin.

Figure 4 shows a second embodiment in which part of each loop portion 7 which is joined to the handle 3 has been replaced by a secondary wheel 12. The secondary wheel 12 thus replaces the curved part of the loop portion 7 and the portion 7 has become a triangular shape with a mounting point for the wheel 12 being located on one of the sides of the triangle. A different view of this embodiment is given in Figure 5 which is an end view taken from the left hand side of Figure 4. The wheelbarrow of Figures 4 and 5 is able to be moved for at least short distances without any lifting of the bin being necessary after the handles have been restored to the working condition, and thus it is suitable for carrying particularly heavy loads.

Figures 4 and 5 show that the two handles 3 are connected together by a horizontal member 10 which is welded to both handles to ensure a strong linkage. The purpose of the member 10 is to ensure that both handles 3 will move simultaneously if the user is standing at the side of the wheelbarrow and is of course able to reach only one of the handles 3 at one time. In use of the wheelbarrow it has been found to be convenient for the loading operation if the user is standing at one side of the barrow and he can then take one or two paces in the direction of the movement when the handle 3 is pulled over.

It is not of course essential that the member 10 should be located in the position depicted in Figure 4 - this position might not be convenient if a load having a substantial vertical height above the rim of the bin was to be carried. An alternative position for the member 10 would be, in the Figure 3 view, just below the pivot which supports the roller 8 since the handles can then be joined together with adequate stiffness and there is then nothing to obstruct the space above the bin 1.

The foregoing description of embodiments of the invention has been given by way of example only and a number of modifications may be made without departing from the scope of the invention as defined in the accompanying claims. For instance, the single wheel at the front end of the wheelbarrow might be replaced by two wheels located on one axis and possibly the front wheel or wheels could be provided with a motor to give some mechanical assistance in the movement of material with the wheelbarrow.

Although the wheelbarrow has been described particularly for use in the garden, it is clear that it will have many other uses such as in industry, on building sites and in the laying of pavements. Since many workers in these occupations eventually suffer from strains in the lower part of the back the possibility offered by the wheelbarrow of the invention in reducing the manual effort needed for loading can help to combat fatigue and contribute to industrial safety.

The possibility of using the wheelbarrow as a wide scoop mounted on wheels is an additional operational benefit for which one would formerly have had to provide a separate scooping tool. In the garden, the scoop can be used for picking up fallen leaves or grass cuttings etc. and in winter it can be used in a snow clearing operation since the scooping action enables a layer of fallen snow to be readily picked up from a footpath surface. With a full load of snow and the handles restored to the wheelbarrow working position, the snow may be carried to the side of the footpath and then tipped out in a place where the snow residues are unlikely to be a danger to pedestrians or vehicles. Many of the snow clearing tools currently available have no provision for carrying the removed volume of snow to the side of a path where it can be allowed to melt without causing further inconvenience.

## Claims

1. A wheelbarrow having a bin (1) for the load, a ground wheel (2) carried on a frame (5) at a front end of the bin, the frame holding the wheel in a fixed location relative to the bin, and a handle (3) on each side at a rear end of the bin, each handle terminating in a cam-shaped leg (7) arranged to support the bin at its rear end, in which each cam-shaped leg is attached at its periphery to a pivot (4) whereby movement of the handles (3) in the direction of the wheel (2) will cause rotation of the cams so that the bin rear end is lowered to ground level to assist loading, the return of the handles (3) to the rear position causing lifting of the bin, the continuous rolling action of the cam periphery in contact with the ground surface causing a steady and readily controllable lifting force to be developed with the control of this force being maintained throughout the whole range of the handle movement, the handles (3) then being retainable in a working condition of the wheelbarrow by a releasable lock (6), characterised in that, the frame (5) is fixed to the bin (1) to form one unit therewith and each said pivot (4) to which a respective leg is attached is located on the said frame, and the two handles (3) are coupled together by a joining member (10) which ensures that both handles are movable simultaneously as a rigid unit about the pivots (4).

2. A wheelbarrow as claimed in Claim 1, in which the said joining member (10) is connected to the handles (3) in a position located just below each said pivot (4).

3. A wheelbarrow as claimed in Claim 1 or 2, in which the said joining member (10) is secured by welding to both handles (3).

4. A wheelbarrow as claimed in any one of Claims 1 to 3, in which each handle (3) is formed of metal tubing with the cam-shaped leg (7) being shaped as a closed loop from the same material.

5. A wheelbarrow as claimed in any one of CLaims 1 to 4, in which the releasable lock means comprises a bolt (6) capable of passing through holes in the frame (5).

6. A wheelbarrow as claimed in any one of Claims 1 to 5, in which each cam-shaped leg (7) carries a support for a secondary wheel (12), the arrangement being such that part of the curved periphery of the cam is replaced by the perimeter of said secondary wheel (12).

7. A wheelbarrow as claimed in any one of Claims 1 to 6, in which the bin (1) rear end carries a roller arranged such that when the rear end has been lowered to ground level, the rear end will be supported on the roller to form a movable scoop.

**Revendications**

1. Brouette comportant un récipient (1) pour la charge, une roue de terre (2) portée sur un châssis (5) à l'avant du récipient, le châssis tenant la roue en position fixe par rapport au récipient, et un manche (3) de chaque côté à l'arrière du récipient, chaque manche se terminant en un pied à contour de came (7) disposé de manière à soutenir l'arrière du récipient, dans lequel chaque pied à contour de came est attaché à sa périphérie à un pivot (4) de manière à ce que le mouvement des manches (3) dans le sens de la roue (2) cause la rotation des cames afin que l'arrière du récipient descende au niveau du sol pour permettre le chargement, le retour des manches (3) à la position arrière entraîne le soulèvement du récipient, l'action de rotation continue de la périphérie de la came en contact avec la surface du sol causant le développement d'une force de soulèvement régulière et facilement contrôlable, le contrôle de cette force étant maintenu dans tout le mouvement du manche, les manches (3) pouvant alors être retenus en condition de travail de la brouette par un loquet désengageur (6), caractérisé en ce que le châssis (5) est fixé au récipient (1) pour former une unité intègre et chacun desdits pivots (4) auxquels un pied respectif est attaché est situé sur ledit châssis, et les deux manches (3) sont joints ensemble par un membre de raccord (10) qui assure que les deux manches peuvent être déplacés simultanément en tant qu'unité rigide autour des pivots (4).

2. Brouette selon la revendication 1, dans laquelle ledit membre de raccord (10) est connecté aux manches (3) dans une position située juste en dessous de chacun desdits pivots (4).

3. Brouette selon la revendication 1 ou 2, dans laquelle chacun des membres de raccord (10) est attaché par soudage aux deux manches (3).

4. Brouette selon l'une quelconque des revendications 1 à 3, dans laquelle chaque manche (3) est formé de tubes métalliques avec le pied à contours de came (7) étant en forme de boucle fermée lui-aussi en tubes métalliques.

5. Brouette selon l'une quelconque des revendications 1 à 4, dans laquelle le loquet désengageur comprend un verrou (6) pouvant passer par des trous situés dans le châssis (5).

6. Brouette selon une quelconque des revendications 1 à 5, dans laquelle chacun des pieds à contours de came (7) comprend un support pour une roue secondaire (12), la disposition étant telle que la partie de la périphérie courbe de la came est remplacée par le périmètre de ladite roue secondaire (12).

7. Brouette selon une quelconque des revendications 1 à 6, dans laquelle l'arrière du récipient (1) comporte un rouleau disposé de telle manière que lorsque l'arrière a été mis au niveau du sol, l'arrière sera soutenu sur le rouleau pour former une pelle mobile.

**Ansprüche**

1. Schubkarre mit einem Behälter (1) für die Ladung, einem Rad (2) zum Fahren, das sich an einem Rahmen (5) an der Vorderseite des Behälters befindet, wobei der Rahmen das Rad in einer festen Position im Verhältnis zum Behälter hält und einem Griff (3) an jeder Seite an der Rückseite des Behälters, wobei jeder Griff in einem exzenterförmigen Schenkel (7) endet, der so angeordnet ist, daß der Behälter an der Rückseite gestützt wird, wobei ein exzenterförmiger Schenkel an der Peripherie zu einem Gelenkpunkt (4) befestigt ist, durch den die Bewegung der Griffe (3) in Richtung des Rades (2) die Drehung der Exzenter verursacht, so daß die Rückseite des Behälters auf Bodenhöhe gesenkt wird, um ihn leichter beladen zu können. Durch Rückstellung der Griffe (3) auf die hintere Position wird der Behälter gehoben. Die ständige Rollwirkung der Exzenterperipherie, die mit der Bodenfläche in Berührung ist, verursacht die Entwicklung einer konstanten und leicht kontrollierbaren Hubkraft, wobei die Kontrolle dieser Kraft im gesamten Bewegungsbereichs des Griffes aufrechterhalten bleibt. Die Griffe (3) können dann durch eine lösbare Sperre (6) in Arbeitsposition der Schubkarre gehalten werden, dadurch gekennzeichnet, daß der Rahmen (5) am Behälter (1) angebracht ist, um mit diesem eine Einheit zu bilden, und jeder genannte Gelenkpunkt (4), an dem ein entsprechender Schenkel angebracht ist, befindet sich an dem genannten Rahmen, und die beiden Griffe (3) sind durch eine Verbindungsstrebe (10) miteinander gekoppelt, was gewährleistet, daß beide Griffe gleichzeitig als ein steifes Element um die Gelenkpunkte (4) bewegbar sind.

2. Schubkarre nach Anspruch 1, bei der die genannte Verbindungsstrebe (10) mit den Griffen (3) an einer Stelle verbunden ist, die sich gerade unter dem genannten Gelenkpunkt (4) befindet.

3. Schubkarre nach Anspruch 1 oder 2, bei der die Verbindungsstrebe (10) durch Schweißen an beide Griffe (3) gesichert wird.

4. Schubkarre nach Anspruch 1 bis 3, bei der jeder Griff (3) von einem Metallrohr mit einem exzenterförmigen Schenkel (7) gebildet wird, der als ein geschlossener Ring aus dem gleichen Material geformt wird.

5. Schubkarre nach einem der Ansprüche 1 bis 4, bei der eine lösbare Sperre aus einem Bolzen (6) besteht, der durch Löcher in den Rahmen (5) gesteckt wird.

6. Schubkarre nach einem der Ansprüche 1 bis 5, bei der jeder exzenterförmige Schenkel (7) einen Stütze für ein sekundäres Rad (12) aufweist. Die Anordnung ist so gehalten, daß ein Teil der gewölbten Peripherie des Exzenters durch den Umfang des genannten sekundären Rades (12) ersetzt wird.

7. Schubkarre nach einem der Ansprüche 1 bis 6, bei dem die Rückseite des Behälters (1) mit einer Rolle versehen ist, die so angeordnet ist, daß die Rückseite, nachdem sie auf Bodenhöhe gesenkt wurde, von der Rolle gestützt wird, um eine fahrbare Schaufel zu bilden.

FIG.1.

FIG.2.

FIG.3.

FIG.4.

FIG.5.